# EUROPEAN PATENT SPECIFICATION

(11) **EP 0 503 094 B1**
(45) Date of publication and mention of the grant of the patent: **06.09.1995**
(21) Application number: 91917066.2
(22) Date of filing: 02.10.1991
(51) Int. Cl.: C04B 37/00, C04B 37/02

(54) **METHOD OF ELECTRICALLY JOINING OBJECTS TO BE JOINED INCLUDING CERAMICS**
VERFAHREN ZUM ELEKTRISCHEN VERBINDEN VON ZU VERBINDENDEN ARTIKELN, KERAMIK EINBEGRIFFEN
PROCEDE DE LIAISON ELECTRIQUE D'OBJETS DESTINES A ETRE JOINTS, Y COMPRIS DES CERAMIQUES

(30) Priority: 03.10.1990 JP 267403/90; 03.10.1990 JP 267404/90; 16.04.1991 JP 84109/91
(43) Date of publication of application: 16.09.1992
(73) Proprietor: DAIHEN CORPORATION, Osaka-shi, Osaka 532 (JP)
(72) Inventor: NISHI, Tokumitsu, 18-12, Ohimazato 2-chome, Osaka-shi Osaka 537 (JP); OKUDA, Kouji, 2-6-304, Yokoo 9-chome Suma-ku, Hyogo 654-01 (JP); TAKAI, Hiroshi, 1-30-1107, Takasu-cho 2-chome, Hyogo 663 (JP); HOSHINO, Hisakiyo, 5-17-3 Tsuruno 1-chome, Osaka 566 (JP); NUMANO, Masashi, Abanraifu Mirei 208, Takatsuki-shi Osaka 569 (JP); MIYAKE, Masashi, Sakura-manshon 302, Toyonaka-shi Osaka 560 (JP)
(74) Representative: Gura, Henry Alan
(86) International application number: PCT/JP91/01322
(87) International publication number: WO 92/06054

(56) References cited:
- EP-A- 0 218 943
- EP-A- 0 500 937
- JP-A-61 036 180

## Description

The present invention generally relates to an electric joining method for butt joining an electroconductive ceramics element with a further said element or a metal element while taking measures to at least partly relieve the thermal stress that may be generated.

Conventionally, in order to join an electroconductive ceramic element with another such ceramic element or a metal element, direct resistance heating, high frequency inductive heating, or a combination of these methods etc. have been proposed. In the direct resistance heating method, when a body to be formed by joining two elements together, parts at either side of an abutment region are each arranged in contact with an electrode which is supplied with an electric current, heat is generated at the abutment region to heat said region preferentially. A joining agent at the abutment region is melted thereby and so the parts are joined together. According to the method using high frequency inductive heating, an induction coil is provided around the abutment region of the body that is to have the joint, and the region is preferentially heated by the induction heating, so that the joining agent in the abutment region is melted. If direct resistance heating is used in combination with high frequency inductive heating, a ceramic of a higher resistance, namely, having a lower electrical conductivity, is heated beforehand by the high frequency inductive heating to lower the resistance value (that is, to increase the conductivity). Thereafter, direct resistance heating is carried out to produce a large current flow to heat the abutment region quickly.

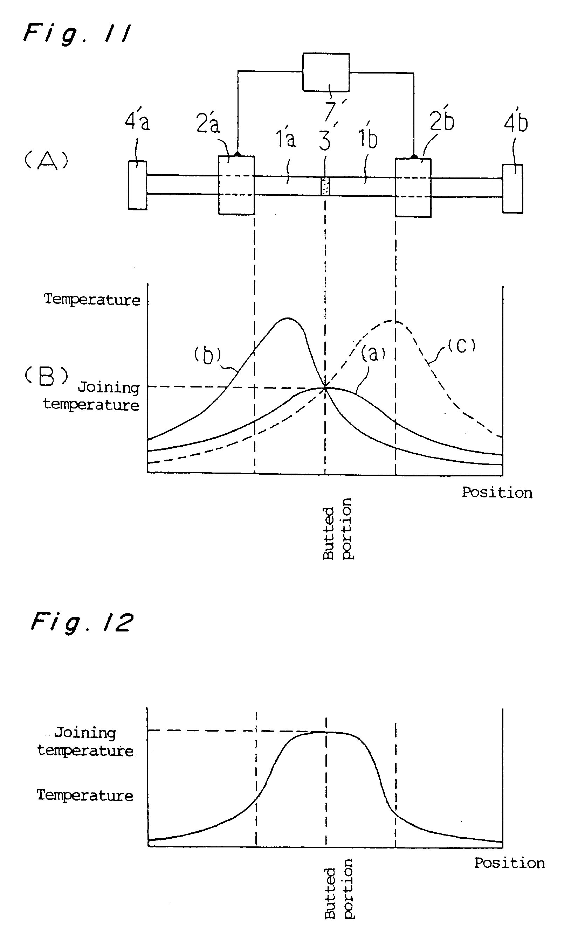

Fig. 11(A) shows the arrangement for performing conventional direct resistance heating. Conductive cylindrical ceramic parts 1a',1b' to be joined are brought into abutment with each other through a joining agent 3', thereby forming an abutment region. Ring-shaped electrodes 2a',2b' are provided butting against the corresponding ceramic parts 1a',1b' in the manner indicated in the drawing. Thermal insulators 4a',4b' are placed at the end portions of the ceramic parts 1a',1b', respectively. A voltage is applied between the electrodes 2a' and 2b' while the ceramic parts 1a',1b' are put under pressure by a compression device (not shown) acting on the thermal insulators 4a',4b'. As a result, heat is generated at the ceramic parts 1a',1b' because of the current flow in a direction transverse to the plane of abutment of the ceramic parts 1a',1b'. Since the abutment region is preferentially heated by this heat, the joining agent 3' is melted, thereby joining the ceramic parts 1a',1b' together. In such a case as above where the parts to be joined are made of the same material in the same shape and are joined using electrodes of a small heat capacity, since the resistance values of both materials are equal to each other, the quantities of heat generated in the respective parts between the electrodes 2a',2b' is equal. Accordingly, the two materials to be joined in the vicinity of the abutment region are heated generally uniformly as is indicated by a curve (a) of Fig. 11(B) and moreover no large temperature gradient is formed in them in the vicinity of the electrodes. Similarly, employing the other two joining methods described earlier, if the materials to be joined are in the same shape and of the same material, or if the joining temperature is low, there is no particular problem.

The electrodes 2a',2b' for the direct resistance heating are generally formed of heat-resisting metal such as tungsten, molybdenum or the like or inorganic material with heat-resistance such as carbon or the like. These kinds of material have a good electrical conductivity and a good thermal conductivity. For instance, if the resistance values of the parts to be joined are the same, the heat generated in the parts between the electrodes 2a' and 2b' during the current flow dissipates to an electrode tool (not shown) and the other portions of the parts by thermal conduction. As a result, a sharp temperature gradient appears in the parts in a longitudinal direction in the vicinity of the mounting of the corresponding electrode, as is shown in Fig. 12. The temperature gradient becomes larger with increase of joining temperature, or rate of heating, or heat capacity of the electrodes, or thermal conductivity of the material of the electrodes.

In general, there is a frequent need to join parts made of dissimilar materials, or that have different shapes or sizes, at a high joining temperature, or to join different kinds of materials with a large difference of resistance values at a high joining temperature. In such cases, however, different amounts of heat are generated in the parts to be joined, which can produce a problematic temperature gradient due to the flow of heat in the vicinity of the abutment region. In the example of Fig. 11(A), supposing that the resistance values R1,R2 of the ceramic parts 1a',1b' are greatly different (R1»R2), the heat generated in the part 1a' not only heats the abutment region, but also flows into the part 1b' and the electrode tool (not shown). As a consequence, a large temperature gradient is formed in the longitudinal direction at the centre of the abutment region in addition to the temperature gradient generated in each part where the electrode is mounted on it, as represented by a curve (b) in Fig. 11(B). The temperature gradient is larger as the difference between the resistance values of the parts to be joined becomes larger, the joining temperature is higher, the rate of heating/cooling is faster or the heat capacity of the ceramic part 1b' is larger. When the ceramic parts 1a',1b' are heated using high frequency inductive heating under the same conditions as above, in contrast, the heat generated is more concentrated in the ceramic part 1b' having the lower resistance, giving the alternative temperature profile shown by a curve (c) of Fig. 11(B) but which has as large a gradient as the curve (b).

The thermal stress increases with increase of the temperature gradient. When the stress exceeds breaking strength, ie. the rupture limit of the materials to be joined, they crack and break up. If the temperature for joining two parts is raised when the temperature gradient is large, the maximum temperature of that part which generates more heat becomes much higher than the temperature of the abutment region. Therefore, a portion of the ceramic part at the maximum temperature may be adversely decomposed or other material deterioration may occur. This effect may require restriction of the joining temperature, which makes some techniques difficult, such as, the use of heat-proof material. Moreover, if it is difficult to shorten the distance between the electrodes and the rate of heating cannot be accelerated, more electric energy is required for the joining process and the running costs are increased.

In the combined use of direct resistance heating and high frequency inductive heating, the ceramic part of higher resistance is processed through high frequency inductive heating so as to lower the resistance value thereof (to increase the electric conductivity) before direct resistance heating is applied. This prior art has been employed to lower the resistance values of ceramic materials with an aim to increase the electric current for the case where ceramics of high resistance values at room temperatures are electrically joined together. Therefore, if the technique is applied to electric joining of two materials of different resistance values, since the resistance between the electrodes is determined by the resistance value of the higher resistance part, it is necessary to heat that part. However, when the region bridging the two ceramic parts is subjected to high frequency inductive heating, the lower resistance part is mainly heated, and the inductive heating power must be increased in order to heat the higher resistance part. If the electric power is raised, the lower resistance part is heated further, the temperature gradient of the two ceramic parts becomes large, and the parts may be damaged by the thermal stress. Therefore, if high frequency inductive heating is used with direct resistance heating for the purpose of increasing the electrical conductivity without considering the temperature gradient, generation of cracks due to thermal stress resulting from temperature gradients cannot be avoided.

According to one aspect of the present invention, there is provided an electric joining method for butt joining an electroconductive ceramic element with a further said element or a metal element, which comprises the steps of applying pressure to hold the elements together in a region of abutment where said butt joining is to take place, arranging a pair of electrodes in contact with said elements to be joined and with said region of abutment therebetween, with a joining agent interposed between the parts at said region, heating said elements between said electrodes by Joule effect by applying a voltage between said electrodes, applying further heating to a zone or zones of said elements for reducing a temperature gradient formed by the Joule effect heating, thereby to maintain the thermal stress in said elements smaller than the breaking stress of said elements, and raising the temperature of said abutment region to a temperature at which the two elements can be joined while applying both said Joule effect heating and said further heating.

Said further heating may be applied to a part or the whole of a pair of said electrodes, thereby reducing the temperature gradient in said elements in the regions where said electrodes are mounted.

The further heating may be produced by a low-resistance-material heating means to heat the material of the low resistance among the materials to be joined.

Alternatively, the heating may be produced by a combination of said electrode heating and said low-resistance-material heating means.

The electrode heating may be achieved by raising the electric resistance of the electrodes as a whole or in part. The low-resistance-material heating may be achieved employing a high frequency inductive heating apparatus.

In one form of the invention, when at least one of said elements to be joined has a different resistance from the other element or elements, said further heating is applied to heat mainly the element of lower resistance of said elements to be joined, thereby reducing the temperature gradient formed in the vicinity of said abutment region, and preferably either said electrodes or said low-resistance-material heating means is used until the temperature of the abutment region reaches a predetermined temperature, and then, both said and the low-resistance-material heating means are used together.

The combined use of electrode heating and the low-resistance-material further heating may take place from the start of the heating process.

When electrode heating is obtained using the further heating means, since the ceramic elements where the electrodes are mounted and their vicinity are positively heated from the start of the electric current supply, the temperature gradient generated in a longitudinal direction of the elements between the electrodes and in their vicinity can be eased.

In the case where parts of different resistance values are to be joined together, if the parts are heated only by the electrode heating means to the joining temperature by applying a voltage between the electrodes, a large temperature gradient is created in the parts in the vicinity of the abutment region. However, if the further heating is applied to heat the material of the lower resistance, the temperature in each portion of the parts between the electrodes is raised by the heat from both heating means. Particularly, the heat output the low-resistance-material heating means acts to ease the temperature gradient (to reduce the thermal stress) in the vicinity of the abutment region of the parts. Therefore, generation of cracks due to a large temperature gradient can be prevented. Moreover, when the joining temperature is obtained by the heat from both means of heating, as compared with the case where it is obtained by one heating means, the quantity of heat added to each part from both heating means can be reduced. As a result, the maximum temperature of the parts can be lower than with conventional methods. Deterioration of the ceramic materials due to the overheating can be prevented thereby.

Furthermore, the use of both heating means jointly can be matched to differences of physical properties, size or shape of the parts to be joined. If the two heating means are used together from the start of the heating, heating is effectively conducted in a shorter time while generation of cracks and deterioration of the materials are prevented. When a direct high frequency inductive heating means is employed for the second heating means, the low-resistance-material can be heated directly, to achieve effective heating as a whole and reducing the process costs.

According to another aspect of the invention there is provided apparatus for butt joining an elctro-conductive ceramic element with a further said element or a metal element in accordance with the method of the invention.

These and further features of the present invention will become clearer from the following description of preferred embodiments of the invention with reference to the accompanying drawings in which like parts are designated by like reference numerals throughout, and in which:
Fig. 1(A) is a schematic structural diagram of apparatus for performing a first method according to the present invention;
Fig. 1(B) is a diagram of the temperature profile in a longitudinal direction of a workpiece on which said first method is performed;
Fig. 2 is a schematic side view of the apparatus for performing said first method;
Fig. 3(A) is a schematic structural diagram of apparatus for performing a second method according to the present invention;
Fig. 3(B) is a diagram of the temperature profile in a longitudinal direction of a workpiece on which said second method is performed;
Fig. 4 is a schematic structural diagram of apparatus for performing a third method according to the present invention;
Fig. 5 is a schematic structural diagram of apparatus for performing a fourth method according to the present invention;
Fig. 6 is a diagram of the temperature profile in a longitudinal direction of a workpiece on which said fourth method is performed;
Fig. 7 is a schematic structural diagram of apparatus for performing a seventh method according to the present invention;
Fig. 8(A) is a schematic structural diagram of apparatus for performing an eighth method according to the present invention;
Fig. 8(B) is a diagram of the temperature profile in a longitudinal direction of a workpiece on which said eighth method is performed;
Fig. 9 is a schematic structural diagram of apparatus for performing the eighth method according to the present invention;
Fig. 10 is a schematic structural diagram of an apparatus for performing the eighth method according to the present invention;
Fig. 11(A) is a schematic structural diagram of apparatus for performing a conventional method of electric butt joining;
Fig. 11(B) is a diagram of the temperature profile in a longitudinal direction of a workpiece being joined according to the method of Fig. 11(A); and
Fig. 12 is a diagram of a further temperature profile in the longitudinal direction of the workpiece being joined according to said conventional method.

### EMBODIMENT 1

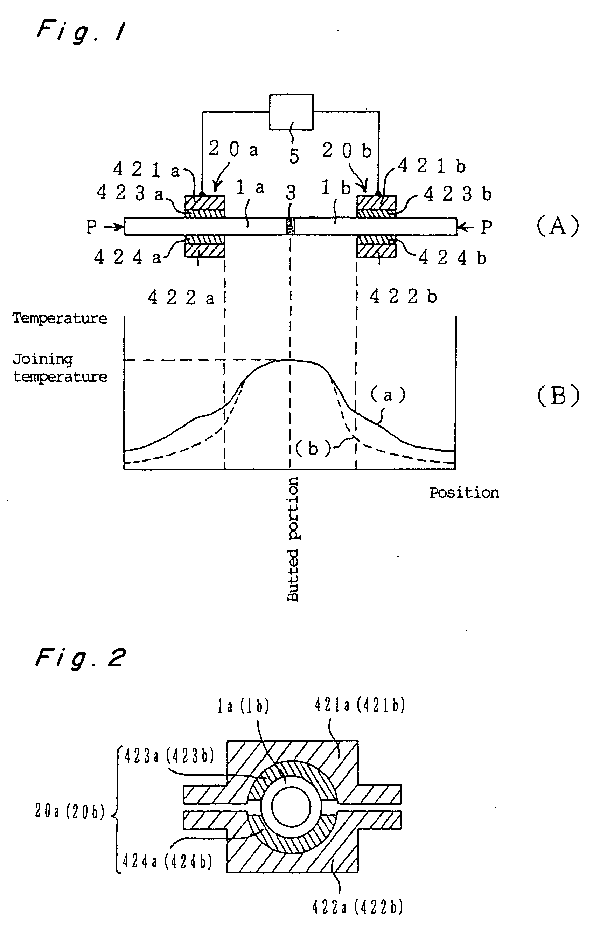

Figs. 1(A) and 2 schematically illustrate a front view and a side view of an apparatus for performing a first embodiment of the joining method according to the present invention. In this embodiment, two tubular parts of the same size making up the workpiece are joined together. More specifically, a joining agent 3 of silicon-based brazing alloy is interposed between recrystallized SiC ceramic parts 1a and 1b (10⌀x5⌀x100mm) which are the two parts to be joined, and a suitable pressure P is applied to fix the parts in place.

Next, an electrode 20a is prepared to be detachable from the material. The electrode 20a comprises carbon electrode elements 421a,422a each of which has an inner semi-circular peripheral surface, and resistance heater elements 423a,424a made of recrystallized SiC. The resistance heater elements 423a,424a, which are obtained by cutting a 10mm-long tube in half, are secured to the inner peripheries of the corresponding electrodes 421a,422a. In the same manner, an electrode 20b comprising of electrode elements 421b,422b and resistance heater elements 423b,424b is prepared. These electrodes 20a,20b are spaced 30mm away in opposite directions from the abutment region 3, and are tightly secured to the ceramic parts 1a,1b. Although a fastening means is not shown in Fig. 2, suitable known means can be employed to secure each electrode 20a,20b tightly. The conductive resistance heater elements assume approximately 1/3 the resistivity of the ceramic parts to be joined. A first heating means is provided by a power source 5 and electrodes 20a,20b for direct resistance heating, while a second heating means is provided by the power source 5 and conductive resistance heater elements 423a,424a,423b,424b to heat the electrode parts.

With using Ar gas as the working atmosphere, a voltage is applied between the electrodes 20a,20b connected to the power source 5 to increase gradually the current flow so that the temperature is raised at a rate of 80°C/min. The joining temperature 1500°C is achieved with a current of about 38A. After the joining temperature is kept at 1500°C for 5 minutes or so, the current is gradually decreased and the joining temperature is lowered to room temperatures at a rate of 80°C/min to complete the joining process. In this case, the heat is generated in the conductive resistance heater 423a,424a,423b,424b because of the current supplied in the initial stage, and this heat is transmitted to the ceramic parts 1a,1b where the electrodes 20a,20b are mounted. At the same time, heat is generated at the ceramic parts 1a,1b. The temperature profile when the desired joining temperature is attained is as indicated by curve (a) in Fig. 1(B), which is significantly more moderate as compared with a curve (b) in the comparative diagram (Fig. 11(B)) of the prior art method.

The completed workpiece was cut to a length of 120mm centring the abutment region. After a three-point bending test, the workpiece was found to have a strength of approximately 420kgf/cm² (412 x 10⁷Pa). Moreover, when a longitudinal cutting plane of the joined body was ground and then inspected through an optical microscope, no crack could be detected. For comparison, carbon elements of the same shape as the above resistance heater were mounted instead on another workpiece and the ceramic parts were joined together under the same conditions as above. The result of a three-point bending test of the comparative example showed the presence of cracks about 5-10mm from the electrodes. The workpiece broke approximately at the position of the cracks, and a strength of only 53kgf/cm² (5.2 x 10⁶Pa) was achieved.

In this first embodiment, although the conductive resistance heater is used as a second or further heating means to heat the electrodes, it is similarly effective to form the electrodes with a reduced sectional area to increase the resistance, or to constrict the electrodes using a material having a larger resistivity. It is apparent that these possibilities may be employed solely or jointly. The necessary heat for the heating means differs depending on the thermal properties, eg. size or material strength and the joining temperature etc. However, too much heat is wasteful, and therefore the heat flow is preferably kept as small as possible within the limits permitted by thermal stress. Moreover, although the electrodes are arranged at either side of the abutment region, the method may be applied to every electrode or some of the electrodes when three or more parts are to be joined so long as the thermal stress permits it.

### EMBODIMENT 2

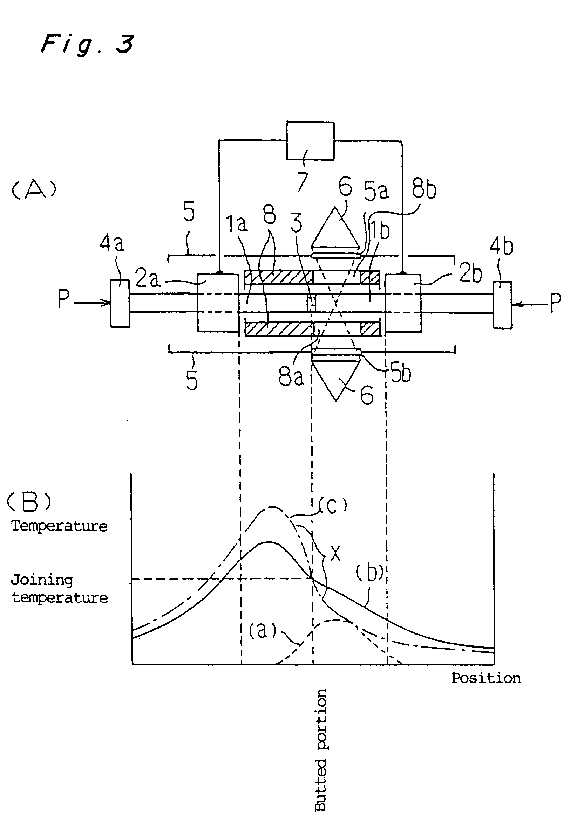

Fig. 3(A) is a schematic structural diagram of an apparatus specifically for joining two tubular parts of the same size, but different resistivities. In particular, SiC ceramic parts 1a,1b each having the outer diameter 10mm, inner diameter 5mm and length 100mm are arranged to abut each other with a joining agent 3 of silicon-based brasing alloy intervening therebetween. The SiC ceramic parts 1a,1b have resistivities in the region of about 10⁰[Ω.cm] and 10⁻²[Ω.cm], respectively. In other words, the resistivities of the two parts differ by more than two decimal places. A pair of ring-shaped carbon electrodes 2a,2b, of 10mm radial thickness, are tightly attached to the outer peripheral surfaces of the ceramic parts 1a,1b. Each electrode 2a,2b is spaced 30mm away from the abutment region of the ceramic parts 1a,1b. A suitable pressure P is applied to thermal insulators 4a,4b at the ends of the ceramic parts 1a,1b by a clamping device (not shown), thereby to impose a predetermined pressure on the abutting faces of the ceramic parts 1a,1b. The ceramic parts 1a,1b are rotatably held in a rotary mechanism (not shown). A first heating means for direct resistance heating is provided by a power source 7 and the electrodes 2a,2b.

As is schematically shown in Fig. 3(A), a chamber 5 surrounds at least the electrodes 2a,2b and the region therebetween in an air-tight manner. An inert gas such as Ar gas fills the chamber 5. A light beam from a halogen-lamp heater 6 passes through windows of quartz glass 5a,5b formed at a part of the chamber 5. The halogen-lamp heater 6 and its power source (not shown) constitute a low-resistance-material heating means as a second heating means, that is, to mainly heat the ceramic part 1b having the lower resistance. The halogen-lamp heater 6 acts at a region where the temperature gradient of the ceramic parts 1a,1b becomes large when the joining temperature of the abutment region is raised to a desired temperature only by the electric current flowing between the electrodes 2a and 2b. In other words, the halogen-lamp heater 6 is provided to make the maximum temperature gradient smaller. A generally cylindrical thermal insulator 8 covers almost all of the workpiece between the electrodes 2a,2b, and has apertures 8a,8b coincident with the windows 5a,5b so as to pass the light from the halogen-lamp heater 6. It is needless to say that the apertures 8a,8b may also be provided with windows of quartz glass. The halogen-lamp heater 6, the windows of quartz glass 5a,5b and the apertures 8a,8b are so positioned as to apply auxiliary heat to a region of the ceramic part 1b of the lower resistance adjacent to the abutment region.

The joining process of this second embodiment will now be described.

Although the first and second heating means are used jointly, heating is applied by the second heating means first. After it has heated the abutment region to some extent, heating is applied by the first heating means. More specifically, before supplying electric current to the electrodes 2a,2b, a spot light having a diameter of about 10mm is applied to a region 3mm closer to the ceramic part 1b from the abutment region through the windows 5a,5b of the chamber 5 by the halogen-lamp heater 6. When the temperature of the ceramic part 1b at the centre of the spot light reaches a desired temperature, for example, 1000°C, a voltage is applied between the electrodes 2a,2b by the power source 7 which is operated so that the electric current is gradually increased to increase the temperature at a rate of 80°C/min. The auxiliary heating is continued even after the current supply to the electrodes is started. When the electric current is about 32A and the joining temperature reaches 1500°, this state is held for about 5 minutes. Thereafter, the electric current to the electrodes and also the heating by the halogen-lamp heater 6 are gradually restricted. The rate of temperature drop at this time is 80°C/min. By stopping the electric current supply to the electrodes and the auxiliary heating the temperature falls to room temperature, and joining is completed.

In this case, the temperature profile achieved by using only the halogen-lamp heater 6 to reach the desired temperature to start the electric current supply is as shown by curve (a) in Fig. 3(B), while the temperature profile when the temperature of the abutment region reaches the desired joining temperature after the start of the electric current supply to the electrodes is as indicated by curve (b) in Fig. 3(B). For comparison, the temperature profile when only the electric current supply to the electrodes is used for heating, without the halogen-lamp heater 6, is represented by curve (c) in Fig. 3(B). In comparing the curves (b) and (c), the temperature gradient at the part X, where it is very large in the conventional method, becomes more moderate. Moreover, the maximum temperature of the higher-resistance ceramic part 1a is found to be less. Needless to say, the temperature profile at every point in time during the heating and cooling processes should be such that the resulting thermal stress in each part is never larger than the breaking stress of the part.

A sample was obtained 120mm long from the completed workpiece from this second example of the method, centring the abutment region. From the result of a three-point bending test of the sample in the state as it was cut out, a strength of approximately 340kgf/cm² (333 x 10⁷Pa) was confirmed. Moreover, when the sample was cut in a longitudinal direction and the cut surface polished for inspection by an optical microscope, the presence of cracks could not be observed. When a similar test was conducted on a workpiece which joined according to a conventional method without using the second heating means, a crack was present about 5-10mm from the abutting faces in the higher-resistance ceramic part 1a. Further, the three-point bending test of the conventional sample resulted in a break at almost the same position as the above crack. The strength of the comparative sample was only 50kgf/cm² (4.9 x 10⁶Pa) or so.

### EMBODIMENT 3

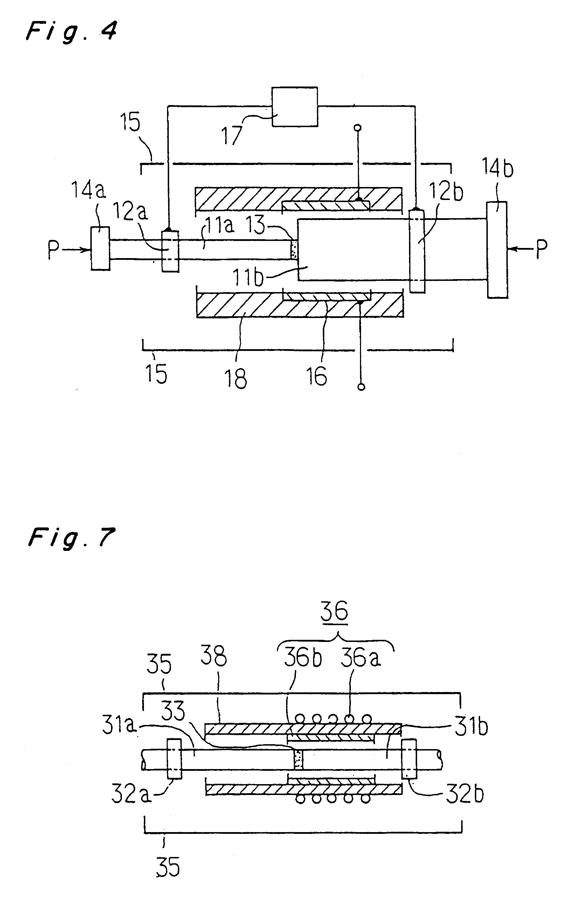

Fig. 4 is a schematic structural diagram for performing a third method according to the present invention. Two parts, one in the form of a tube and the other in the form of a circular cylinder, of the same material are joined in this example. In Fig. 4, the same parts as in Fig. 3 are designated by reference numerals obtained by adding ten to the corresponding numerals of Fig. 3, for example, 1a in Fig. 3 is represented by 11a in Fig. 4. A ceramic part 11a to be joined is of SiC and is in the form of a tube having an outer diameter 10mm, inner diameter 5mm and length 100mm. The other ceramic part 11b to be joined is of SiC and is in the form of a circular cylinder having an outer diameter 20mm and length 100mm. A silicon-based brazing alloy is used as a joining agent 13. Similar to the second example, an appropriate pressure P is applied to the parts 11a,11b via thermal insulators 14a,14b. Although the parts 11a,11b are made of a material having the same resistivity, their cross-sectional areas are different. Therefore, the resistance values are greatly different between the parts 11a and 11b.

A halogen-lamp heater is used as a low-resistance-material heating means as in the second heating means in the second example. In this example, however, a cylindrical resistance furnace having a carbon heater 16 fixed to the inner periphery of a cylindrical thermal insulator 18 is employed as a heating source for the low-resistance-material heating means serving as the second heating means. The resistance furnace is so arranged that the centre of the carbon heater 16 is about 10mm distant in a longitudinal direction from the abutting face of the larger cross-section ceramics part 11b. The heating source of the carbon heater 16 is not indicated in the drawing. A pair of electrodes 12a,12b connected to a power source 17 are tightly secured to the outer peripheral surfaces of the ceramic parts 11a,11b, and are spaced 50mm from the abutment region. Similarly to the first example, the method is performed in a sealed chamber 15 containing Ar gas.

The joining process of this third embodiment will now be described.

The carbon heater 16 is heated to raise the temperature of a portion the ceramic part 11b about 10mm from the abutting face to 1000°C or so. When the temperature there becomes 1000°C, a voltage is applied between the electrodes 12a and 12b, and the power source 17 is controlled to raise the temperature at a rate of 80°C/min by gradually increasing the electric current. Heating by the carbon heater 16 is continued even after the start of the current supply to the electrodes 12a,12b. When the joining temperature reaches 1500°C with a current of about 35A, this state is held for about five minutes. Then, the electric current to the electrodes 12a,12b and carbon heater 16 is gradually decreased, thereby lowering the temperature to room temperature at a rate of 80°C/min. Thereafter, the electric current is switched off and joining is finished.

When the resultant workpiece was subjected to the same test as in the first example, it was confirmed that the join was a good one without cracks in the workpiece. Moreover, when for comparison, the same ceramic parts 11a,11b were joined without using the second heating means, a crack was generated when the joining temperature was raised, and the two ceramic parts were separated at the region of the crack.

Accordingly, it is possible to control the thermal stress acting on the ceramic parts when they are joined since the material having a lower resistance with less generation of heat is mainly heated by the low-resistance-material heating means of the second heating means from the start to the end of the electric current supply to the electrodes. The ceramic parts are preserved from cracking, and moreover, the maximum heating temperature of the larger resistance ceramic part can be lowered. Furthermore, since the distance between the electrodes and the joining time can be shortened, the power consumption and so the running costs are reduced. The method makes it possible to join parts of greatly different resistance values, or the cross-section areas of which are extremely different, at a high temperature. A favourable temperature profile is obtained during joining owing to the difference of thermal properties, eg. resistivity and coefficient of linear expansion etc., thereby effectively suppressing the residual stress.

In this third embodiment it was described how the auxiliary heating was first carried out by the low-resistance-material heating means and was then supplemented by the direct resistance heating means to the joining temperature. However, switching in of the two heating means may be conducted in the reverse order, or both heating means can be used simultaneously throughout the heating to the joining temperature.

### EMBODIMENT 4

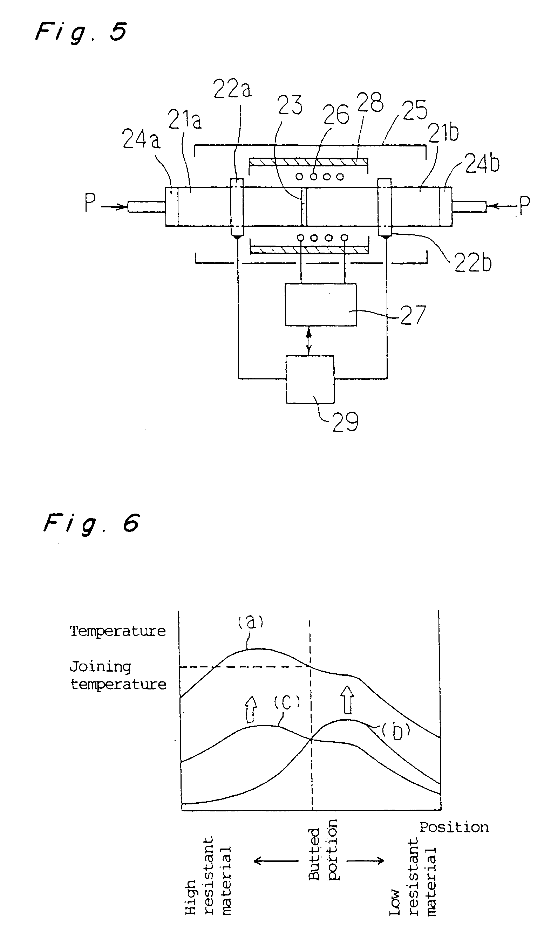

A further embodiment of the present invention, using high frequency inductive heating equipment as a low-resistance-material heating means, will now be described with reference to the schematic illustration in Fig. 5 where the same parts as in Fig. 3 are designated by reference numbers obtained by adding 20 to the corresponding numerals of Fig. 3. An induction coil 26 of the equipment is controlled by a source unit 27. The induction coil 26 is made of a copper pipe containing cooling water, and so arranged as to surround the periphery of a ceramic part (metal) 21b of lower resistance from the abutment region.

Specifically, ceramics part 21a to be joined is a SiC ceramic of high resistance (having resistivity of about 10⁻¹Ω.cm) with an outer diameter of 10mm, inner diameter of 5mm and length of 200mm. The other ceramic part 21b to be joined is a SiC ceramic of low resistance (having resistivity of about 10₋₃Ω.cm) with an outer diameter of 10mm, inner diameter of 5mm and length of 200mm. Joining agent 23 is a SiC/Si/C/binder mixture. A ring-shaped carbon electrode 22a is provided about 50mm away from the abutment region of the ceramic part 21a, while a carbon electrode 22b in the same form is provided at an end of the ceramic part 21b. The reason why the electrode 22b is arranged at the end of the ceramic part 21b, and not as shown in the schematic diagram of Fig. 5, is that, since almost all the electric power to be consumed through the current supply to the electrodes is lost within the high resistance part 21a, the electrode 22a is set as close as possible to the abutment region and the electrode 22b of the lower resistance part is placed at such a position as not to hinder the induction coil 26 and to reduce the cooling effect of an electrode tool. It is needless to say that the electrode 22b may alternatively be arranged symmetrically with the electrode 22a as indicated in Fig. 5.

When the direct high frequency inductive heating equipment is used, it is mainly the ceramic part 21b of lower resistance that is heated. The temperature profile at this time is expressed by curve (b) in Fig. 6. When heating is applied only by the electric current supplying to the electrodes 22a, 22b, the heat is generated mainly in the ceramic part 21a of the higher resistance. When heat generated by both heating means is combined and the temperature is raised to a joining temperature the temperature profile is as shown by curve (a).

More specifically, electric current is first supplied from the source unit 27 to the induction coil 26, so that heating by the high frequency inductive heating equipment is started. This heating by the high frequency inductive heating equipment is carried out with the temperature rise rate of about 200°C/min. until the temperature of the abutment region reaches about 1000°C. The maximum heating temperature at this time is about 1200°C at a position about 10-30mm into the lower resistance ceramic part 21b from the abutment face. In this state, the ceramic parts 21a, 21b have no cracks anywhere. Subsequently, while the high frequency inductive heating is continued at a fixed rate, a voltage is applied to the electrodes 22a,22b connected to the power source 29. Heating is continued with a temperature rise rate of about 200°C/min. until the abutment region reaches about 1450°C. After that state has been maintained for about one minute, the temperature is lowered to room temperature by a procedure in reverse order to the heating procedure to complete the joining process. When the joined body is cut in a longitudinal direction and the cut surface is ground, it is found by optical microscopic inspection that no crack is present at any part of the materials joined. Moreover, the joint itself is shown to be a fine layer, about 100µm thick.

For comparison, the ceramic parts were joined by under the same conditions using only the electric current supply to the electrodes 22a,22b, that is, by direct resistance heating applied without the addition of high frequency inductive heating. When the abutment region reached approximately 1400°C, of the ceramic part 21a cracked near the abutment region. This crack was observed through an optical microscope even after the ceramic part 21a had cooled. In addition, when the joining temperature reached 1450°C, the maximum temperature of the higher resistance ceramic part 21a was 1850°C or more, which indicated deterioration of the material due to sublimation. Even when joining is carried out by using only high frequency inductive heating, cracks are similarly observed. Moreover, countless pores are found in the lower resistance ceramic part 21b due to the sublimation of some of the material at the maximum heating temperature, leading to the deterioration of the material strength. As described hereinabove, if either the direct resistance heating or direct high frequency inductive heating is used alone, it is not only impossible to obtain a well-joined body, but deterioration of the material results.

### EMBODIMENT 5

In this embodiment there is firstly direct resistance heating by a first heating means to some extent, and heating by a low-resistance-material heating means of a second heating means is then added. The apparatus for operating in accordance with this embodiment is the same as that shown in Fig. 5 for the previous embodiment. Thus, direct high frequency inductive heating equipment is employed in this embodiment as the low-resistance-material heating means. In the case where the direct resistance heating is first performed, since the higher resistance ceramic part 21a is mainly heated, the temperature profile in this case is opposite to the curve (b) of Fig. 6. When direct high frequency inductive heating by the second heating means is added, the temperature profile becomes as indicated by the curve (a) of Fig. 6. More specifically, the abutment region was heated through the direct resistance heating of the first heating means, up to 1200°C or so with a temperature rise rate of about 200°C/min. At this time, the middle region between the electrode 22a on the higher resistance ceramic part 21a and the abutting face was heated to the highest temperature, i.e., about 1500°C. No cracks appeared in either of the ceramic parts 21a, 21b. Subsequently, while the direct resistance heating was maintained constant, the abutment region was heated up to 1450°C or so by the second heating means through direct high frequency inductive heating with a temperature rise rate of about 200°C/min. When the abutment region reached about 1450°C, this state was held for about one minute, and the temperature then lowered to room temperatures by stages in the opposite order to those in the heating process. After checking the result of the joining process by the same test as in embodiment 4, favourable joining was confirmed.

### EMBODIMENT 6

In this embodiment both a first heating means and a second, low-resistance-material heating means are employed together form the start of heating. The apparatus used here is the same as that shown in Fig. 5. Thus, a direct high frequency inductive heating unit is used as the low-resistance-material heating means according to this embodiment. When the material are to be joined with simultaneous use of the first heating means for direct resistance heating and the second heating means for high frequency inductive heating, since both ceramic parts generate heat simultaneously in the first stage of the heating process, the temperature profile will be as represented by a curve (c) in Fig. 6. Then, as heating is continued, the temperature profile is changed to the curve (a) of Fig. 6. More specifically, the electric power of the direct resistance heating is raised at the rate of about 200W/min. and at the same time, the electric power of the high frequency inductive heating is raised at the rate of about 500W/min. The abutment region is heated to about 1450°C in about five minutes. When the temperature becomes 1450°C or so, this state is held for about one minute. Then, the power of both the direct resistance heating and high frequency inductive heating is reduced simultaneously at a rate equal to that of the heating process until the temperature is lowered to room temperature when joining is completed. When the joining temperature is 1450°C or so,the maximum temperature of the higher resistance ceramic part 21a is about 1600°C. It was clear from a similar evaluation to that in embodiment 4, the joined body has no cracks which is indicative of the favourable result. Moreover, the instant embodiment enables reduction of the joining time much more than Embodiments 4 and 5.

Although the heating ratio of the direct resistance heating and direct high frequency inductive heating is not particularly specified, the direct resistance heating is superior in terms of the heating efficiency and therefore, it is more advantageous to use the direct resistance heating more, from the viewpoint of processing costs. If the materials to be joined have different coefficients of linear expansion and residual stress becomes a problem when the materials are returned to room temperature, it is desirable to determine the power ratio of the first heating means and low-resistance-material heating means so that the material with the smaller coefficient of linear expansion is heated to a higher temperature.

In the present Embodiment 6 as well as in the Embodiments 4 and 5, although the induction coil 26 is obtained by winding a coil conductor to have a constant diameter, if the coil is wound so that the diameter of the coil is gradually increased with distance from the abutment region, the portion near the abutment region generates most heat through the induction heating, while the portion further from the abutment region generates less heat. Therefore, a more moderate temperature gradient is obtained. The shape of the induction coil is not necessarily cylindrical as in the above embodiments, but may be any so long as it assures uniform heating corresponding to the shape of the parts to be joined.

Although the induction coil 26 is arranged inside the chamber 25 in Embodiments 4-6 above, it may be possible to provide an insulating protecting tube made of quartz or the like just outside the parts to be joined thereby to control the atmosphere. In such a case, the induction coil is placed immediately outside the insulating protecting tube. Accordingly, the relative position of the induction coil to the parts to be joined can be changed easily, and the heating position can be adjusted with ease.

### EMBODIMENT 7

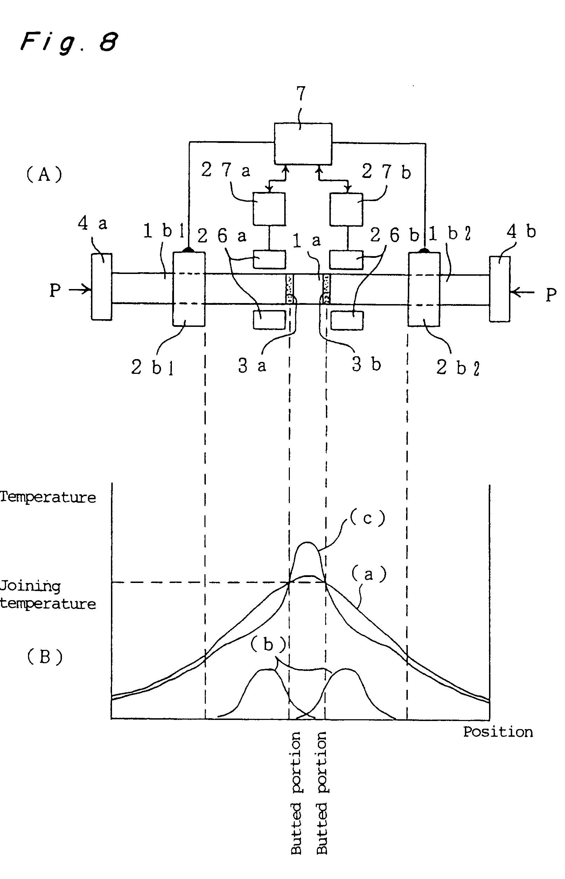

The direct high frequency inductive heating equipment is used as the low-resistance-material heating means of the second heating means in the foregoing Embodiments 4-6. According to the present Embodiment 7, however, an indirect high frequency inductive heating unit is used as the low-resistance-material heating means. In the indirect high frequency inductive heating unit, a heating element is heated through high frequency inductive heating and parts to be joined are heated indirectly by this heating element. Fig. 7 indicates an arrangement for operating in this manner. The parts in Fig. 7 similar to those in Fig. 3 are designated by reference numerals obtained by adding 30 to the corresponding numerals of Fig. 3. According to Embodiment 7, a cylindrical heating element heated by high frequency electric power 36b is spaced by a small gap from the ceramic part 31b of lower resistance, a thermal insulator 38 is provided outside the heating element 36b, and a high frequency induction coil 36a is wound outside the thermal insulator 38. The induction coil 36a, heating element 36b and a power source for the high frequency inductive heating (not shown) constitute a low-resistance-material heating means 36. The control method described with reference to Embodiments 4-6 is applicable also to this embodiment.

### EMBODIMENT 8

Whereas two materials are joined in the embodiments already described, an example of joining three or more conductive parts will be described below. As shown in Fig. 8(A), a conductive part 1a to be joined which has a larger resistance than the other parts 1b1, 1b2 to be joined is placed between the parts 1b1 and 1b2, through joining agents 3a,3b forming two abutment regions therewith. The parts 1b1,1b2 are provided with electrodes 2b1,2b2, respectively. A power source 7 is connected to the electrodes 2b1,2b2 for applying a voltage to the electrodes to provide a first heating means. There are further provided two low-resistance-material heating means to heat the vicinity of the abutment regions of the parts 1b1 and 1b2, each of which may be a resistance furnace heating device, a lamp heating unit a laser heating unit, a gas heating unit, a high frequency inductive heating unit etc.; these are represented as heating devices 26a,26b and electric power sources 27a,27b.

With the application of a voltage between the electrodes 2b1 and 2b2, current runs through the parts 1b1, 1a, 1b2 and joining agents 3a,3b, whereby heat is generated corresponding to each resistance value. If the resistance of the part 1a is considerably larger than that of the parts 1b1,1b2, the temperature profile has a large temperature gradient in the vicinity of the two abutment regions as indicated by a curve (c) of Fig. 8(B). Therefore, if the portion near the abutment regions of the lower resistance parts 1b1,1b2 which generate a smaller heat value when heated by the first heating means is heated by the low-resistance-material heating means of the further heating means (curve (b) of Fig.8(B)), the abutment regions can be heated to the necessary joining temperature while the temperature gradient is eased as shown by curve (a), thereby preventing fracture of the parts due to the thermal stress. The low-resistance-material heating means may be a single device or may be designed to be two independently controllable devices as indicated in Fig. 8. For instance, in using high frequency inductive heating, although both the parts 1b1,1b2 to be joined may be heated by one induction coil and one power source, it is possible to heat the parts 1b1,1b2 by respective independent induction coils provided in the vicinity of the abutment regions, i.e., by two separate high-frequency power sources. Moreover, it is also possible that one of the first heating means and the low-resistance-material heating means is started first, and the other heating means is added later at a certain temperature, or, both the heating means are operated simultaneously to heat the abutment regions to the joining temperature.

If the relation of the resistance values of the parts to be joined is the reverse to that used in the preceding example, the temperature profile is reversed as well. In other words, the parts 1b1,1b2 are heated by the first heating means, and the parts 1a at the center is heated by the low-resistance-material heating means.

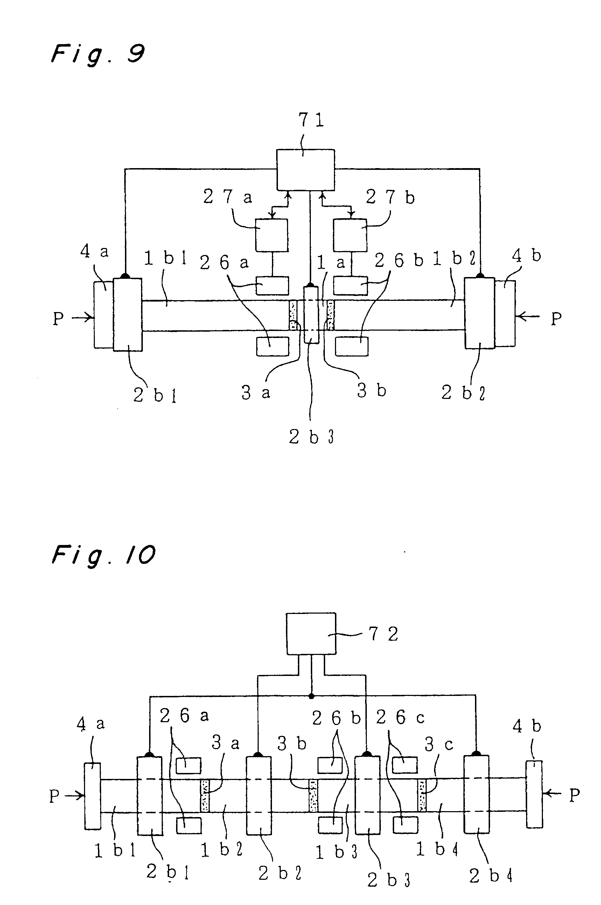

Although the above description is related to the case where three parts are joined, the concept is applicable similarly to the case where the number of the parts to be joined is greater. In such case, the parts of lower resistance generating less heat by the first heating means (direct resistance heating) should be heated by the low-resistance-material heating means of the second heating means. Although the electrodes as the first heating means are provided only for the parts 1b1,1b2 in the foregoing embodiment and one power source is used to heat the parts, naturally the electrodes may be provided at either side of each abutment region and controlled by two separate power sources. That is, the above-described modified method is carried out at two paints. Fig. 9 shows an example using as power source a single phase three-wire system for the direct resistance heating as the first heating means. An electrode 2b3 is additionally provided for the conductive material 1a to be joined. The power source of the single phase three-wire system 71 is connected to apply a voltage between the electrodes 2b1 and 2b3, and also 2b2 and 2b3. The electrodes 2b1,2b2 are pressed into contact with end faces of the parts 1b1,1b2, respectively. The other illustrated elements are arranged similarly to the preceding embodiments for joining to parts. The two abutment regions can be heated and joined simultaneously in the Embodiment of Fig. 9.

Fig. 10 is an example in which a polyphase power source, e.g., a three-phase power source is used. In Fig. 10, two parts 1b1,1b3 to be joined and two conductive parts 1b2,1b4 to be joined having a larger resistance than the parts 1b1,1b3 are arranged in abutment with each other through joining agents 3a,3b,3c, thereby forming three abutment regions. The parts 1b1,1b2,1b3,1b4 are provided with respective electrodes 2b1,2b2,2b3,2b4 to which the three-phase power source 72 is connected to apply a voltage. In order to heat the vicinity of the abutment regions of the parts 1b1 and 1b3 of lower resistance, heating units 26a,26b,26c are provided. The other elements of the apparatus are arranged similarly to the case where two parts are joined, as in the foregoing embodiments. The three abutment regions can be heated and joined simultaneously in this arrangement.

The low-resistance-material heating means described in Embodiments 2, 3, 7 has a disadvantageously low heating efficiency since it heats the parts indirectly. Therefore, it is desirable in terms of the cost of the joining process that heating by the low-resistance-material heating means is restricted to that needed to prevent the generation of cracks resulting from the thermal stress, and instead, heating by the first heating means working by direct resistance heating, which has a good efficiency, is increased. However, if there is no difference in the coefficient of linear expansion between the materials although the resistivity is different, since it is preferable from the viewpoint of the residual stress when the temperature is returned to room temperature that the temperature profiles are similar at both sides of the plane of abutment when the joining agent is set, the second heating means should be used much more to make the temperature distribution small. If the coefficient of linear expansion is also different between the materials to be joined, it is advantageous from the viewpoint of the residual stress that some degree of the temperature gradient is generated. In other words, the residual stress can be decreased by lowering the temperature of the material with the higher coefficient of linear expansion. Therefore, heating by the low-resistance-material heating means should be selected suitably depending on the difference of physical properties of the materials to be joined and the thermal effects, e.g., leakage of heat to the electrodes or holding device, in the surroundings of the materials to be joined.

Since the leakage of a large amount of heat to the electrode and/or holding device from the part to be joined produces a temperature gradient in the above Embodiments 2-8, if that temperature gradient is problematic, it is necessary to reduce the heat capacity of the electrode and/or holding device as much as possible or to prevent the leakage of heat by heat insulation or the like, or to use both the electrode-heating means of the second heating means described in the first embodiment and the low-resistance-material heating means.

Although the materials are joined in the fixed state in the foregoing embodiments, they may be rotated to be heated uniformly in the circumferential direction. Moreover, there may be temperature control during the cooling process in the same fashion as described during the heating process in Embodiments 4-6, but a different procedure may also be possible.

The temperature profile at each time point during the heating and cooling processes in Embodiments 1-8 should be such that the thermal stress in each part be not larger than the breaking stress. Since such a temperature profile can vary greatly depending on the shape, size, difference of resistance values, thermal properties or strength of the parts to be joined, the optimum position and size of the heating elements of the second heating means, i.e., electrodes and induction coils, etc. should be selected for the kind of the parts to be joined. At the same time, the electric power to be fed by the first and the further heating means, the rate of supply of power and the rate of change of temperature, etc. should be determined beforehand based on the preliminary experiments or the like.

Although the electroconductive ceramic is SiC ceramic in the foregoing embodiments, it is possible to join other kinds of electroconductive ceramics, for example, carbides such as ZrC, TiC, nitrides such as ZrN, TiN, borides such as ZrB₂, TiB₂, silicides such as MoSi₂, or composite ceramics such as Si₃N₄, Al₂O₃ including the above electroconductive ceramics or composite materials with metal like cermet, by the use of the present invention.

Moreover, although only ceramic materials are joined together in the embodiments described so far, it is clear that the present invention is applicable to joining of a ceramic part with a metallic part. That is, since the resistance of the metallic material is generally smaller than that of the electroconductive ceramics material, the low-resistance-part in Embodiments 2-8 may be substituted with the metallic part when employing the present invention. In this case, an active metal brazing alloy or the like can be used as the joining agent. If the residual stress due to the difference of the coefficient of linear expansion should be taken into consideration, the temperature profile should be adjusted, and a material having a coefficient of linear expansion of intermediate value or soft metal, eg. Cu, Ni or the like, should be inserted into the abutment region to reduce the stress.

The sources of the first heating means (7,17,29,71,72 etc) and the power sources of the low-resistance-material heating means (27a,27b,27 etc) can be controlled independently or interlockingly. Moreover, these power sources may be manually controlled or automatically controlled in accordance with the data input beforehand. Furthermore, a temperature sensor (not shown) may be provided to detect the temperature of the abutment region and/or the part near the abutment region, so that the signal is fed back to the sources to control the rate of heating.

In the above embodiments, the joining agent and electrodes are made of material of low resistance to oxidization and therefore, it is necessary to provide an inert atmosphere or a vacuum for the joining operation. Thus, the chambers (5,15,25,35) may be made air-tight. However, instead of an air-tight chamber a throughflow of gas may be provided. When joining agents and electrodes usable in an oxygen-rich atmosphere are employed, for instance, if oxide solder or the like are employed, it is not necessary to use air-tight chambers.

In general terms, because heating is obtained only by direct resistance heating or direct high frequency inductive heating, the thermal stress generated at the material in the vicinity of the electrode or abutment region is eased, thereby to prevent the breakage of the ceramic parts to be joined and to obtain effectively a composite body with high heat-proof properties.

Arranging that a part or the whole of an electrode generates heat from the start of the electric current supply by the electrode-heating means of the second further heating means, so that the thermal stress generated at the material in the vicinity of the electrode during joining is eased, assists in preventing fracture of the ceramic part to be joined, while reducing running costs in terms of the electric power consumption because the distance between the electrodes and the joining time can be reduced.

When joining conductive parts of different resistance values by employing both the first heating means and the low-resistance-material heating means of the second or further heating means to raise the temperature of the abutment region to the joining temperature, the thermal stress generated at the materials can be reduced to less than the breaking stress on account of the temperature gradient of the parts in the vicinity of the abutment region being eased, thus avoiding generation of cracks resulting from a large temperature gradient. Since the heat from the two heating means is combined together to reach the joining temperature, in comparison with the case where the joining temperature is produced by only a single heating means, it is possible to add less heat from the two heating means to each part. A desired joining temperature is achieved while the maximum heating temperature of each part is restricted. Moreover, the deterioration of the ceramic materials to be joined as a consequence of overheating can be prevented.

The invention is applicable in general to any difference of thermal properties or shape and size of the parts to be joined. Furthermore, if the two heating means are used concurrently, heating is carried out with good efficiency in a short time. If the direct high frequency inductive heating equipment is used as a low-resistance-material heating means, it is possible to heat directly the part with the lower resistance. Accordingly, heating is conducted particularly effectively and the costs of operation are reduced.

## Claims

1. An electric joining method for butt joining an electroconductive ceramics element with a further said element or a metal element, which comprises the steps of:
applying pressure to hold the elements together in a region of abutment where said butt joining is to take place;
arranging a pair of electrodes in contact with said elements to be joined and with said region of abutment therebetween, with a joining agent interposed between the parts at said region;
heating said elements between said electrodes by Joule effect by applying a voltage between said electrodes;
applying further heating to a zone or zones of said elements for reducing a temperature gradient formed by the Joule effect heating, thereby to maintain the thermal stress in said elements smaller than the breaking stress of said elements; and
raising the temperature of said abutment region to a temperature at which the two elements can be joined while applying both said Joule effect heating and said further heating.

2. An electric joining method according to claim 1, wherein said further heating is applied to a part or the whole of a pair of said electrodes, thereby reducing the temperature gradient in said elements in the regions where said electrodes are mounted.

3. An electric joining method according to claim 2, wherein said electrode heating is effected by raising the electric resistance of said electrodes.

4. An electric joining method according to claim 1 or claim 2, wherein when at least one of said elements to be joined has a different resistance from the other element or elements, said further heating is applied to heat mainly the element of lower resistance of said elements to be joined, thereby reducing the temperature gradient formed in the vicinity of said abutment region.

5. An electric joining method according to claim 4, wherein either said electrodes or said low-resistance-material heating means is used for heating until the temperature of said abutment region reaches a predetermined temperature, after which both said electrodes and said low-resistance-material heating means are used together.

6. An electric joining method according to claim 4, wherein both said electrodes and said low-resistance-material heating means are used for the start of the electric current supply.

7. An electric joining method according to any one of claims 4 to 6, wherein said low-resistance-material heating means is a high frequency inductive heating apparatus.

8. Apparatus for butt joining an electroconductive ceramics element with a further said element or a metal element, comprising:
means for holding the elements together under pressure at an abutment region at which the butt joining is to be effected;
first heating means for applying a voltage to said elements comprising a pair of electrodes for engagement with the elements on opposite sides of the abutment region whereby to heat the elements between said electrodes;
means for applying further heating to a zone or zones of said elements for reducing a temperature gradient or gradients formed by the Joule effect heating; and
said first heating means and further heating means being arranged to be operable together on the elements.

## Patentansprüche

1. Elektrisches Verbindungsverfahren zum aneinanderstoßenden Verbinden eines elektrisch leitfähigen Keramikelementes mit einem weiteren solchen Element oder einem Metallelement, welches die Schritte umfaßt:
Aufbringen von Druck zum Zusammenhalten der Elemente in einem Anstoßbereich, wo die anstoßende Verbindung stattfinden soll;
Anordnen eines Paares von Elektroden in Kontakt mit den zu verbindenden Elementen und mit dem Anstoßbereich dazwischen, wobei ein Verbindungsmittel zwischen den Teilen an dem Bereich zwischengelagert ist;
Erwärmen der Elemente zwischen den Elektroden durch den Joule-Effekt, und zwar durch Anlegen einer Spannung zwischen den Elektroden;
Bewirken weiterer Erwärmung einer Zone oder Zonen von den Elementen zum Reduzieren eines Temperaturgradienten, welcher durch die Joule-Effekterwärmung gebildet ist, um somit die thermische Spannung in den Elementen niedriger zu halten als die Bruchspannung der Elemente; und
Erhöhen der Temperatur von dem Anstoßbereich auf eine Temperatur, bei welcher die zwei Elemente verbunden werden können, während sowohl die Joule-Effekterwärmung und die weitere Erwärmung bewirkt werden.

2. Elektrisches Verbindungsverfahren gemäß Anspruch 1, bei welchem die weitere Erwärmung auf einen Teil oder die Gesamtheit eines Paares von den Elektroden bewirkt wird, wodurch der Temperaturgradient in den Elementen in den Bereichen reduziert wird, wo die Elektroden montiert werden.

3. Elektrisches Verbindungsverfahren gemäß Anspruch 2, bei welchem die Elektrodenerwärmung durchgeführt wird durch Erhöhen des elektrischen Widerstandes der Elektroden.

4. Elektrisches Verbindungsverfahren gemäß Anspruch 1 oder Anspruch 2, bei welchem, wenn zumindest eines der zu verbindenden Elemente einen unterschiedlichen Widerstand von dem anderen Element oder Elementen hat, die weitere Erwärmung bewirkt wird, um hauptsächlich das Element mit niedrigerem Widerstand der zu verbindenden Elemente zu erwärmen, wodurch der Temperaturgradient, welcher in der Nähe des Anstoßbereiches gebildet ist, reduziert wird.

5. Elektrisches Verbindungsverfahren gemäß Anspruch 4, bei welchem entweder die Elektroden oder die Erwärmungseinrichtung aus Material mit niedrigem Widerstand zum Erwärmen verwendet wird, bis die Temperatur des Anstoßbereiches eine vorbestimmte Temperatur erreicht, wonach sowohl die Elektroden als auch die Erwärmungseinrichtung aus Material mit niedrigem Widerstand zusammen verwendet werden.

6. Elektrisches Verbindungsverfahren gemäß Anspruch 4, bei welchem sowohl die Elektroden als auch die Erwärmungseinrichtung aus Material mit niedrigem Widerstand für den Beginn der elektrischen Stromzufuhr verwendet werden.

7. Elektrisches Verbindungsverfahren gemäß einem der Ansprüche 4 bis 6, bei welchem die Erwärmungseinrichtung aus Material mit niedrigem Widerstand eine Hochfrequenzinduktiv-Erwärmungsvorrichtung ist.

8. Vorrichtung zum anstoßenden Verbinden eines elektrisch leitfähigen Keramikelementes mit einem weiteren solchen Element oder einem Metallelement, umfassend:
eine Einrichtung zum Halten der Elemente zusammen unter Druck an einem Anstoßbereich, bei welchem die anstoßende Verbindung durchgeführt werden soll;
eine erste Erwärmungseinrichtung zum Anlegen einer Spannung an die Elemente, umfassend ein Paar von Elektroden zum Eingriff mit den Elementen an entgegengesetzten Seiten des Anstoßbereiches, um somit die Elemente zwischen den Elektroden zu erwärmen;
eine Einrichtung zum Bewirken weiterer Erwärmung einer Zone oder Zonen von den Elementen zum Reduzieren eines oder mehrerer Temperaturgradienten, welcher durch die Joule-Effekterwärmung gebildet worden ist; und
wobei die erste Erwärmungseinrichtung und die weitere Erwärmungseinrichtung angeordnet sind, um zusammen an den Elementen betätigbar zu sein.

## Revendications

1. Procédé de raccordement électrique destiné au raccordement bout à bout d'un élément céramique conducteur de l'électricité et d'un élément correspondant supplémentaire ou d'un élément métallique, comprenant les étapes suivantes :
l'application d'une pression destinée à maintenir les éléments en coopération dans une région de butée lorsque le raccordement bout à bout doit être réalisé,
la disposition de deux électrodes au contact des éléments à raccorder, la région de butée étant placée entre elles, un agent de raccordement étant disposé entre les pièces dans ladite région,
le chauffage des éléments entre les électrodes par effet Joule par application d'une tension entre les électrodes,
l'application d'un chauffage supplémentaire à une ou plusieurs zones des éléments pour la réduction d'un gradient de température formé par chauffage par effet Joule, si bien que la contrainte thermique dans les éléments est maintenue à une valeur inférieure à la contrainte de rupture des éléments, et
l'élévation de la température de la région de butée à une valeur à laquelle les deux éléments peuvent être raccordés par utilisation à la fois du chauffage par effet Joule et du chauffage supplémentaire.

2. Procédé de raccordement électrique selon la revendication 1, dans lequel le chauffage supplémentaire est appliqué à une partie ou à la totalité d'une paire d'électrodes, si bien que le gradient de température dans les éléments dans les régions dans lesquelles sont montées les électrodes est réduit.

3. Procédé de raccordement électrique selon la revendication 2, dans lequel le chauffage des électrodes est réalisé par élévation de la résistance électrique des électrodes.

4. Procédé de raccordement électrique selon la revendication 1 ou 2, dans lequel, lorsque l'un au moins des éléments à raccorder a une résistance différente de celle de l'autre ou des autres éléments, le chauffage supplémentaire est appliqué afin qu'il chauffe essentiellement l'élément de plus faible résistance parmi les éléments à raccorder, si bien que le gradient de température formé au voisinage de la région de butée est réduit.

5. Procédé de raccordement électrique selon la revendication 4, dans lequel les électrodes ou le dispositif de chauffage du matériau de faible résistance sont utilisés pour le chauffage jusqu'à ce que la température de la région de butée atteigne une température prédéterminée, puis les électrodes et le dispositif de chauffage du matériau de faible résistance sont utilisés ensemble.

6. Procédé de raccordement électrique selon la revendication 4, dans lequel les électrodes et le dispositif de chauffage du matériau de faible résistance sont utilisés tous deux dès le début de la transmission d'un courant électrique.

7. Procédé de raccordement électrique selon l'une quelconque des revendications 4 à 6, dans lequel le dispositif de chauffage du matériau de faible résistance est un appareil de chauffage par induction à hautes fréquences.

8. Appareil de raccordement bout à bout d'un élément céramique conducteur de l'électricité et d'un élément correspondant supplémentaire ou d'un élément métallique, comprenant :
un dispositif de maintien des éléments en coopération sous pression dans une région de butée dans laquelle le raccordement bout à bout doit être réalisé,
un premier dispositif de chauffage destiné à appliquer une tension aux éléments et comprenant une paire d'électrodes destinées à coopérer avec les éléments sur les côtés opposés de la région de butée de manière que les éléments placés entre les électrodes soient chauffés,
un dispositif d'application d'un chauffage supplémentaire dans une ou plusieurs zones des éléments afin que le gradient ou les gradients de température formés par chauffage par effet Joule soient réduits, et
le premier dispositif de chauffage et le dispositif de chauffage supplémentaire sont destinés à fonctionner ensemble sur les éléments.
